# EUROPÄISCHE PATENTSCHRIFT

(11) **EP 0 531 353 B1**
(45) Veröffentlichungstag und Bekanntmachung des Hinweises auf die Patenterteilung: **31.01.1996**
(21) Anmeldenummer: 91909685.9
(22) Anmeldetag: 30.05.1991
(51) Int. Cl.: H04Q 11/04, H04L 29/06, G06F 13/12

(54) **STEUERVORRICHTUNG MIT EINER EINSTECKKARTE FÜR DIE DATENÜBERMITTLUNG**
DEVICE WITH A PLUG-IN CIRCUIT BOARD FOR THE CONTROL OF DATA COMMUNICATION
DISPOSITIF DE COMMANDE AVEC UNE CARTE ENFICHABLE POUR LA TRANSMISSION DE DONNEES

(30) Priorität: 30.05.1990 DE 4017771
(43) Veröffentlichungstag der Anmeldung: 17.03.1993
(73) Patentinhaber: AVM AUDIOVISUELLES MARKETING UND COMPUTER-SYSTEME GMBH, D-13355 Berlin (DE)
(72) Erfinder: FAXEL, Peter, D-1000 Berlin 61 (DE)
(74) Vertreter: Pfenning, Meinig & Partner
(86) Internationale Anmeldenummer: DE9100463
(87) Internationale Veröffentlichungsnummer: WO9119404

(56) Entgegenhaltungen:
- EP-A- 0 238 255
- FR-A- 2 637 440
- US-A- 4 922 490

## Beschreibung

Die Erfindung betrifft eine steuervorrichtung nach dem Oberbegriff des Anspruchs 1.

Die Verwendung von Einsteckkarten für mit einem digitale Daten übertragenden Fernsprechnetz gekoppelte Personalcomputer oder rechnergesteuerte Arbeitsplätze ist erst seit relativ kurzer Zeit bekannt. Eine derartige Einsteckkarte ist in der EP-A-0 238 255 beschrieben. Diese stellt eine Schnittstelle zwischen Endgeräten, die einem Prozessor aufweisen können, und einem digitale Daten übertragenden Fernsprechnetz dar. Diese Einsteckkarte weist einen eigenen Prozessor zur Abarbeitung der für die Datenübertragung erforderlichen Kontroll- und Protokollfunktionen mit den entsprechenden Peripheriebausteinen wie RAM- und ROM-Bausteinen auf (sogenannte aktive Karte). Der Einsatz eines eigenen Prozessors führt jedoch zu aufwendigen und teuren Lösungen, zumal zur Erstellung von Protokollsoftware grundsätzlich mit Hilfsmitteln wie Kreuzcompilern und dergleichen gearbeitet werden muß. Dieser hohe Aufwand ist besonders hinderlich, wenn Anforderungen wie geringe Größe, leichte Integrierbarkeit und geringes Durchsatzvolumen an die Steuervorrichtung gestellt werden.

Es ist daher die Aufgabe der vorliegenden Erfindung, eine Steuervorrichtung mit einer Einsteckkarte für die Datenübermittlung zwischen mindestens einen Prozessor aufweisenden Endgeräten und einem digitale Daten übertragenden Fernsprechnetz zu schaffen, die trotz eines geringen Aufwandes allen Anforderungen bezüglich Betriebssicherheit und Datendurchsatz genügt.

Diese Aufgabe wird erfindungsgemäß gelöst durch die im kennzeichnenden Teil des Anspruchs 1 angegebenen Merkmale. Vorteilhafte Weiterbildungen der erfindungsgemäßen Steuervorrichtung ergeben sich aus den Unteransprüchen.

Dadurch, daß zur Abwicklung der für die Datenübertragung notwendigen Steuer- und Datenkanalprotokolle sowohl auf der Einsteckkarte angeordnete HDLC-Bausteine als auch der Endgeräte-Prozessor vorgesehen sind, wird erreicht, däß die Steckkarte als sogenannte passive Karte, d.h. ohne eigenen Prozessor ausgebildet sein kann. Dadurch ergeben sich ein geringerer Platzbedarf (kurze Einsteckkarte) sowie funktionsmäßige vorteile, beispielsweise kann der Datenaustausch wegen des Fehlens des Engpasses der Kopplung zwischen zwei Prozessoren sehr schnell erfolgen. Die für die Abwicklung der Protokolle notwendige Software wird auf der Festplatte eines Endgerätes gespeichert, wodurch Erweiterungen und Änderungen der Protokolle problemlos durchgeführt-werden können, im Gegensatz zu den mit einem Prozessor bestückten Einsteckkarten, bei denen in diesem Falle die Bausteine ausgetauscht werden müßten.

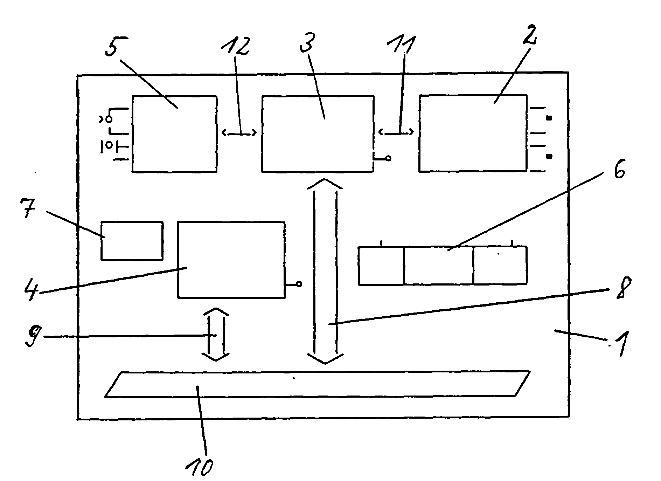

Die Erfindung wird im folgenden anhand eines in der Figur dargestellten Ausführungsbeispiels näher erläutert. Diese zeigt das Blockschaltbild der auf einer Einsteckkarte angeordneten Bausteine.

Auf der Einsteckkarte 1 befinden sich als wesentliche Funktionsbausteine eine Sₒ-Schnittstelle 2, ein HDLC-Baustein 3 für den Steuerdatenkanal (D-Kanal), ein HDLC-Baustein 4 für einen Anwenderdatenkanal (B-Kanal), ein Sprachbaustein 5, ein Interrupt-Baustein 6 und ein Zeitgeber 7. Ein Steuerbus 8 und ein Datenbus 9 dienen zur Übertragung von Daten von den HDLC-Bausteinen 3 und 4 zu einem Rechnerbus 10, der mit dem nicht gezeigten Prozessor eines Endgerätes, vorzugsweise eines Personalcomputers, verbunden ist. Weitere Datenübertragungen erfolgen zwischen der Sₒ-Schnittstelle 2 und den HDLC-Bausteinen 3 und 4 über einen Bus 11 (IOM-Bus) sowie zwischen dem Sprachbaustein 5 und dem HDLC-Baustein 3 über einen Bus 12 (SLD-Bus).

Die für digitale Fernsprechnetze als Standardschnittstelle verwendete, busfähige Sₒ-Schnittstelle 2 überträgt in 4-Drahttechnik Daten und Sprach-signale mit einer Kapazität-von 2 x 64 kbit/s (B-Kanäle) und verfügt zudem über einen Steuerdatenkanal mit der einer Übertragungskapazität von 16 kbit/s (D-Kanal). Die Sₒ-Schnittstelle 2 übernimmt die Wandlung des einkotmenden Leitungssignals in einen digitalen Datenstrom. Ihre galvanisch getrennte Eingangsstufe ist primärseitig durch eine LC-Kombination und sekundärseitig durch eine schnelle Diodenschaltung gegen transiente Störsignale auf den Zuleitungen geschützt.

Der Datenstrom der Sₒ-schnittstelle 2 gelangt über den seriellen Bus 11 zu den HDLC-Bausteinen 3 und 4. Die für die Abwicklung von HDLC-Transportprotokollen notwendigen Funktionen wie Blockbildung, Prüfbitergänzung und CRC-Prüfung werden für einen B-Kanal (64 kbit/s) und einen D-Kanal (16 kbit/s) ausgeführt. Die HDLC-Bausteine 3 und 4 speichern ein- und ausgehende Daten bis zu einer Tiefe von 32 Bytes und übernehmen dadurch eine wichtige Pufferfunktion. Der Prozessor des Endgerätes hat direkten Zugriff auf diese Pufferspeicher der beiden HDLC-Bausteine 3 und 4. Die Daten werden jeweils in einer Blockgröße von 32 Bytes eingeschrieben bzw. ausgelesen.

Der Sprachbaustein 5 kann für den Aufbau einer Sprachverbindung zum Fernsprechnetz verwendet werden.Gekoppelt über eine SLD-Schnittstelle erfolgt die D/A- und A/D-Wandlung von Sprachdaten entsprechend den gewählten Codierungsvorschriften. Über eine Verstärkerstufe kann ein dynamischer Handapparat direkt angeschlossen werden.

Die beiden B-Kanäle für die Übertragung von Anwenderdaten und Sprachsignalen sind wahlfrei zum HDLCBaustein 4 und zum Sprachbaustein 5 durchschaltbar. Somit kann über die Steuervorrichtung parallel zu einer bestehenden Sprachverbindung eine HDLC-gesicherte Datenübertragung durchgeführt werden.

Die Anschaltung der HDLC-Bausteine 3 und 4 an den Rechnerbus 10 erfolgt über einen verschiebbaren Adreßblock von 16 Bytes im Ein-/Ausgabebereich. Der benötigte, vom Interrupt-Baustein 6 ausgelöste Interrupt kann frei konfiguriert werden. Da für die Steuervorrichtung kein Hauptspeicher aus dem Adreßraum des Rechners benötigt wird, sind Kollisionen mit anderen Einsteckkarten weitgehend ausgeschlossen.

Die Abwicklung der Protokolle erfolgt weitgehend unabhängig von der Last des prozessors im Endgerät durch den Zeitgeber 7 auf der Einsteckkarte 1.

Beispielhafte Anwendungsmöglichkeiten für die vorliegende Steuervorrichtung sind neben der Sprachübertragung die wahlfreie Übertragung von Daten, Texten und Bildern (Bildschirmtext, Faksimili), wobei jeweils ein entsprechendes Endgerät eingesetzt werden muß.

## Patentansprüche

1. Steuervorrichtung mit einer Einsteckkarte (1) für die Datenübermittlung zwischen mindestens einen Prozessor aufweisenden Endgeräten und einem digitale Daten übertragenden Fernsprechnetz, dadurch gekennzeichnet, daß die Einsteckkarte (1) als "passive Karte", das heißt ohne eigenen Prozessor ausgebildet ist, so daß zur Abwicklung der für die Datenübertragung notwendigen Steuerund Datenkanalprotokolle ausschließlich sowohl auf der Einsteckkarte (1) angeordnete HDLC-Bausteine (3,4) als auch der Endgeräte-Prozessor vorgesehen sind.

2. Steuervorrichtung nach Anspruch 1, dadurch gekennzeichnet, daß eines der Endgeräte ein Personalcomputer ist.

3. Steuervorrichtung nach Anspruch 1 oder 2, dadurch gekennzeichnet, daß eine Datenübertragung über einen Steuerdaten- und zwei Anwendungsdaten-Kanäle vorgesehen ist.

4. Steuervorrichtung nach Anspruch 3, dadurch gekennzeichnet, daß die Anwendungsdaten-Kanäle eine Übertragungskapazität von jeweils 64 kbit/s und der Steuerdatenkanal eine Übertragungskapazität von 16 kbit/s aufweisen.

5. Steuervorrichtung nach einem der Ansprüche 1 bis 4, dadurch gekennzeichnet, daß die Einsteckkarte (1) einen Sprachbaustein (5) für die D/A-oder A/D-Wandlung von über das Fernsprechnetz übertragenen oder zu übertragenden Sprachdaten aufweist, an den ein dynamischer Handapparat anschließbar ist.

6. Steuervorrichtung nach Anspruch 5, dadurch gekennzeichnet, daß die Anwendungsdaten-Kanäle wahlfrei zum zugeordneten HDLC-Baustein (4) und zum Sprachbaustein (5) durchschaltbar sind.

7. Steuervorrichtung nach einem der Ansprüche 1 bis 6, dadurch gekennzeichnet, daß die Abwicklung der Protokolle durch einen zeitgeber (7) auf der Einsteckkarte (1) steuerbar ist.

8. Steuervorrichtung nach einem der Ansprüche 1 bis 7, dadurch gekennzeichnet, daß die HDLC-Bausteine (3,4) einen Puffer für ein- und ausgehende Daten besitzen.

9. Steuervorrichtung nach einem der Ansprüche 1 bis 8, dadurch gekennzeichnet, daß die Einsteckkarte (1) zum Anschluß an das Fernsprechnetz eine Sₒ-Schnittstelle (2) aufweist.

10. Steuervorrichtung nach einem der Ansprüche 1 bis 9, dadurch gekennzeichnet, daß die Einsteckkarte (1) einen Interrupt-Baustein (6) aufweist.

## Revendications

1. Dispositif de commande comportant une carte enfichable (1) pour la transmission de données entre au moins des terminaux possédant un processeur, et un réseau téléphonique transmettant des données numériques, caractérisé en ce que la carte enfichable (1) est agencée en tant que "carte passive", c'est-à-dire sans processeur propre, de sorte que, exclusivement, aussi bien des modules HDLC (3,4) disposés sur la carte enfichable (1) que le processeur des terminaux sont prévus pour l'exécution des protocoles de commande et de canaux de données, qui sont nécessaires pour la transmission de données.

2. Dispositif de commande selon la revendication 1, caractérisé en ce que l'un des terminaux est un ordinateur personnel.

3. Dispositif de commande selon la revendication 1 ou 2, caractérisé en ce qu'il est prévu une transmission de données par l'intermédiaire d'un canal de données de commande et de deux canaux de données d'utilisation.

4. Dispositif de commande selon la revendication 3, caractérisé en ce que les canaux de données d'utilisation possèdent une capacité de transmission de respectivement 64 kbits par seconde et que le canal de données de commande possède une capacité de transmission de 16 kbits/s.

5. Dispositif de commande selon l'une des revendications 1 à 4, caractérisé en ce que la carte enfichable (1) comporte un module de conversation (5) pour la conversion numérique/analogique ou la conversion analogique/numérique de données vocales transmises ou devant être transmises par l'intermédiaire du réseau téléphonique et auquel peut être raccordé un combiné téléphonique dynamique.

6. Dispositif de commande selon la revendication 5, caractérisé en ce que les canaux de données d'utilisation peuvent être interconnectés au choix au module HDLC (4) associé et au module de conversation (5).

7. Dispositif de commande selon l'une des revendications 1 à 6, caractérisé en ce que l'exécution des protocoles peut être commandé par une minuterie (7) située sur la carte enfichable (1).

8. Dispositif de commande selon l'une des revendications 1 à 7, caractérisé en ce que les modules HDLC (3,4) possèdent un tampon pour des données entrantes et sortantes.

9. Dispositif de commande selon l'une des revendications 1 à 8, caractérisé en ce que la carte enfichable (1) possède, pour le raccordement au réseau téléphonique, une interface Sₒ (2).

10. Dispositif de commande selon l'une des revendications 1 à 9, caractérisé en ce que la carte enfichable (1) possède un module d'interruption (6).

## Claims

1. Control device with a plug-in circuit board (1) for data transmission between terminals with at least one processor and a telephone network transmitting digital data, characterised in that the plug-in circuit board (1) is in the form of a "passive board", i.e. does not have its own processor, and therefore HDLC modules (3, 4) arranged on the plug-in circuit board (1) as well as the terminal processor are provided exclusively for handling the control and data channel protocols required for the data transmission.

2. Control device according to Claim 1, characterised in that one of the terminals is a personal computer.

3. Control device according to Claim 1 or 2, characterised in that a data transmission via one control data channel and two application data channels is provided.

4. Control device according to Claim 3, characterised in that the application data channels each have a transmission speed of 64 kbit/s and the control data channel has a transmission speed of 16 kbit/s.

5. Control device according to one of Claims 1 to 4, characterised in that the plug-in circuit board (1) has a speech module (5) for the D/A or A/D conversion of speech data transmitted or to be transmitted via the telephone network, and a dynamic handset may be connected to said speech module.

6. Control device according to Claim 5, characterised in that the application data channels may be optionally switched through to the allocated HDLC module (4) and to the speech module (5).

7. Control device according to one of Claims 1 to 6, characterised in that handling of the protocols may be controlled by a timer (7) on the plug-in circuit board (1).

8. Control device according to one of Claims 1 to 7, characterised in that the HDLC modules (3, 4) have a buffer for incoming and outgoing data.

9. Control device according to one of Claims 1 to 8, characterised in that the plug-in circuit board (1) has an sₒ interface (2) for connection to the telephone network.

10. Control device according to one of Claims 1 to 8, characterised in that the plug-in circuit board (1) has an interrupt module (6).
